# EUROPÄISCHE PATENTSCHRIFT

(11) **EP 3 433 295 B1**
(45) Veröffentlichungstag und Bekanntmachung des Hinweises auf die Patenterteilung: **26.08.2020**
(21) Anmeldenummer: 17710564.0
(22) Anmeldetag: 17.03.2017
(51) Int. Cl.: C08G 18/69, C08G 18/76, C08G 18/82, C08G 18/86, C08G 18/87, C08G 18/32, C08L 75/14

(54) **VERNETZTES POLYURETHAN**
CROSSLINKED POLYURETHANE
POLYURETHANE RETICULE

(30) Priorität: 21.03.2016 EP 16161310; 13.03.2017 EP 17160616
(43) Veröffentlichungstag der Anmeldung: 30.01.2019
(73) Patentinhaber: BASF SE, 67056 Ludwigshafen am Rhein (DE)
(72) Erfinder: POESELT, Elmar, 49448 Lemfoerde (DE); POPPENBERG, Johannes, Wyandotte, MI 48192 (US); ELING, Berend, 49448 Lemfoerde (DE); NIMTZ, Fritz, 67056 Ludwigshafen (DE); FINK, Irina, 22081 Hamburg (DE)
(74) Vertreter: BASF IP Association
(86) Internationale Anmeldenummer: PCT/EP2017/056333
(87) Internationale Veröffentlichungsnummer: WO 2017/162529

(56) Entgegenhaltungen:
- EP-A1- 2 821 423
- WO-A1-2016/026807

## Beschreibung

Die vorliegende Erfindung betrifft ein vernetztes Polyurethan, erhältlich durch ein Verfahren, bei dem man (a) Polyisocyanate mit (b) polymere Verbindungen mit im Mittel mindestens 1,5 gegenüber Isocyanatgruppen reaktiven Wasserstoffatomen, enthaltend (b1) mindestens ein Dien-Blockcopolymer mit im Mittel mindestens 1,5 gegenüber Isocyanat reaktiven Wasserstoffatomen, das eine Polydien-Hauptkette und mindestens eine Seiten- oder endständigen Kette aus einem Polyether und/oder einem Polyester aufweist und wobei der Gewichtsanteil der Polydien-Hauptkette, bezogen auf das Gesamtgewicht des Dien-Blockcopolymers b1) 25 bis 95 Gew.-% beträgt, und gegebenenfalls (b2) weitere polymere Verbindungen mit im Mittel mindestens 1,5 gegenüber Isocyanat reaktiven Wasserstoffatomen, gegebenenfalls (c) Katalysator, gegebenenfalls (d) Vulkanisationsmittel, gegebenenfalls (e) Kettenverlängerer und/oder Vernetzungsmittel, gegebenenfalls (f) Treibmittel und gegebenenfalls (g) Hilfsmittel und/oder Zusatzstoffe zu einer Reaktionsmischung vermischt, zu vernetzbarem Polyurethan aushärtet und Doppelbindungen des Dien-Blockcopolymers (b1) vernetzt, wobei das Vernetzen der Doppelbindungen des Dien-Blockcopolymers b1) durch Schwefel enthaltendes Vulkanisationsmittel oder durch Peroxid enthaltendes Vulkanisationsmittel (d) und/oder durch Bestrahlung mit hochenergetischer Strahlung erfolgt. Weiter betrifft die Vorliegende Erfindung Verbundstoffe und Blends aus vernetztem Polyurethan und Gummi sowie die Verwendung von vernetztem Polyurethan als Reifen oder Teile von Reifen, als Kabelummantelung, Schuhsohle, Rolle oder Schlauch.

Aus Kautschuk hergestellte Elastomere werden in verschiedensten Anwendungsgebieten eingesetzt, wie bei der Herstellung von Reifen für Fahrzeuge, zur Herstellung von Schuhsohlen, zur Herstellung von Rollen, beispielsweise bei Industrieanlagen oder zur Herstellung von Matten, Dichtungen, Handschuhen oder Kabelummantelungen.

Für den Einsatz in solchen und ähnlichen Anwendungen kann ebenfalls Polyurethan eingesetzt werden. Dabei zeigt sich aber, dass die Stärken von Gummi und Polyurethan in unterschiedlichen Bereichen liegen. So zeigt Gummi eine hohe Nassrutschfestigkeit, ermöglicht einen geringen Rollwiederstand von Reifen, und einen geringen Abrieb. Dagegen liegen die Stärken von Polyurethan insbesondere bei einem höheren Modul und einer höheren Härte. Weiter ist Polyurethan chemisch sehr stabil, beispielsweise gegenüber Lösungsmitteln.

Es besteht daher der Wunsch, die vorteilhaften Eigenschaften von Gummi und Polyurethan zu kombinieren. Dies ist möglich, indem Verbundmaterialien aus Gummi und Polyurethan eingesetzt werden. Problematisch ist dabei die beschränkte Haftung beider Materialien.

WO 2016/026807 offenbart polyestermodifizierte Polybutadienole zur Herstellung von thermoplastischen Polyurethanelastomeren und deren anschließende thermoplastischen Verarbeitung, beispielsweise durch Extrusion bei Temperaturen von 211 ° C.

EP 2821423 offenbart die Herstellung von Polyurethan durch Umsetzen von polyestermodifiziertem Polybutandiol, einem unsymmetrischen Diisocyanat und einem Kettenverlängerer bei Temperaturen bis 110 ° C über einen Zeitraum von 31 Stunden.

Weiter existieren Bestrebungen, die Eigenschaften von Polyurethan an die von Gummi anzupassen. So schlägt US 4104265 vor, Polybutadien mit Hydroxylgruppen zu funktionalisieren, mit schwefelhaltigen Vulkanisationsmitteln zu versetzten und mit Polyisocyanat in einem ersten Schritt bei Temperaturen unter 120 ° C zu einem nicht vernetzten Polyurethan umzusetzen und anschließend durch Erwärmen auf 145 bis 200 ° C zu vulkanisieren. US 4104265 schlägt vor, dieses Material bei der Herstellung von Reifen, beispielsweise als Seitenwandung oder als Lauffläche von Reifen einzusetzen. Nachteilig ist die schlechte Verträglichkeit mit den weiteren Komponenten zur Herstellung der Polyurethane und die daraus resultierenden schlechten mechanischen Eigenschaften des erhaltenen vernetzten Polyurethans. Dies zeigt sich beispielsweise durch eine nur ungenügende Reaktion der Polyole mit dem Isocyanat und dadurch nur ungenügendem Molekulargewichtsaufbau. Insbesondere bei thermoplastischen Polyurethan ist aber aufgrund der fehlenden chemischen Vernetzung die vollständige Umsetzung der Ausgangsverbindungen wesentlich.

Zur Verbesserung der Verträglichkeit schlägt EP 1710263 vor, ein Isocyanatprepolymer aus Isocyanatgruppen enthaltenden Verbindungen und Polydienolen herzustellen und diese dann zum Polyurethan umzusetzen, allerdings sind die mechanischen Eigenschaften weiter verbesserungswürdig.

WO 2007025690 beschreibt eine vulkanisierbare Mischung aus einem Kautschukpolymer und dien-basiertem thermoplastischem Polyurethan. Auch die mechanischen Eigenschaften dieser Materialien sind verbesserungswürdig.

Aufgabe der vorliegenden Erfindung war es, Materialien zu liefern, die die Eigenschaften von Gummi und Polyurethan verbinden und dabei hervorragende Eigenschaften, wiehohe Nassrutschfestigkeit, geringen Rollwiderstand, geringer Abrieb, hohes Modul sowie gute Haptik, zeigen. Weiter war es Aufgabe der vorliegenden Erfindung Verbundmaterialien aus Polyurethan und Gummi zu liefern, die hervorragende Haftung zeigen und die beispielsweise bei der Herstellung von Reifen eingesetzt werden können.

Diese Aufgabe wird gelöst durch ein Verfahren zur Herstellung eines vernetzten Polyurethans bei dem man (a) Polyisocyanate mit (b) polymere Verbindungen mit im Mittel mindestens 1,5 gegenüber Isocyanatgruppen reaktiven Wasserstoffatomen, enthaltend (b1) mindestens ein Dien-Blockcopolymer mit im Mittel mindestens 1,5 gegenüber Isocyanat reaktiven Wasserstoffatomen, das eine Polydien-Hauptkette und mindestens eine Seiten- oder endständigen Kette aus einem Polyether und/oder einem Polyester aufweist und wobei der Gewichtsanteil der Polydien-Hauptkette, bezogen auf das Gesamtgewicht des Dien-Blockcopolymers b1) 25 bis 95 Gew.-% beträgt, und gegebenenfalls (b2) weitere polymere Verbindungen mit im Mittel mindestens 1,5 gegenüber Isocyanat reaktiven Wasserstoffatomen, gegebenenfalls (c) Katalysator, gegebenenfalls (d) Vulkanisationsmittel, gegebenenfalls (e) Kettenverlängerer und/oder Vernetzungsmittel, gegebenenfalls (f) Treibmittel und gegebenenfalls (g) Hilfsmittel und/oder Zusatzstoffe zu einer Reaktionsmischung vermischt, zu vernetzbarem Polyurethan aushärtet und Doppelbindungen des Dien-Blockcopolymers (b1) vernetzt, wobei das Vernetzen der Doppelbindungen des Dien-Blockcopolymers b1) durch Schwefel enthaltendes Vulkanisationsmittel oder durch Peroxid enthaltendes Vulkanisationsmittel (d) und/oder durch Bestrahlung mit hochenergetischer Strahlung erfolgt. Weiter wird diese Aufgabe gelöst, durch Verbundstoffe und Blends aus vernetztem Polyurethan und Gummi sowie die Verwendung von vernetztem Polyurethan und/oder Verbundstoffen aus vernetztem Polyurethan und Gummi als Reifen oder Teile von Reifen, als Kabelummantelung, Schuhsohle, Rolle oder Schlauch.

Im Rahmen der vorliegenden Erfindung wird die Mischung der Komponenten a) und b) sowie gegebenenfalls c) bis g) bei Reaktionsumsätzen kleiner 90 %, bezogen auf die Isocyanatgruppen, als Reaktionsmischung bezeichnet. Weiter wird im Rahmen der Erfindung unter einem vernetzten Polyurethan ein Polyurethan verstanden, das erhalten wird durch Vernetzen von Doppelbindungen im vernetzbaren Polyurethan. Vorzugsweise sind dabei mindestens 2 %, besonders bevorzugt mindestens 10 % und insbesondere mindestens 15 % der ursprünglich enthaltenen Doppelbindungen vernetzt. Ein solches vernetztes Polyurethan ist herstellbar nach dem erfindungsgemäßen Verfahren gemäß Anspruch 1. Als vernetzbares Polyurethan wird im Rahmen der vorliegenden Erfindung ein Polyurethan verstanden, das Doppelbindungen enthält, wobei praktisch die Möglichkeit besteht, diese Doppelbindungen zu vernetzen, so dass vernetztes Polyurethan erhalten wird.

Ein vernetztes Polyurethan ist im Wesentlichen durch sein Lösungsverhalten in Dimethylformamid bei 40° C gekennzeichnet. Dabei führt die Vernetzung zu einer deutlichen Verschlechterung des Löse- und Quellverhaltens. Dazu wird zunächst das Löse/Quellverhalten einer vernetzbaren Polyurethanprobe bestimmt. Dazu wird eine Materialprobe mit 0,5 cm x 1 cm x 2 cm gewogen und bei 40° C 24 Stunden in 100 ml Dimethylformamid gelagert. Anschließend wird die Probe entnommen, überschüssiges Lösungsmittel abgetupft und die Masse der gequollenen Probe ermittelt. Weiter wird das Lösungsmittel abgedampft und die Masse des gelösten Polymers bestimmt. Sind mehr als 30 Gew.-% des Ausgangsgewichts des vernetzbaren Polymers gelöst, wird die Vernetzung des vernetzten Polyurethans anhand des löslichen Anteils bestimmt. Dabei liegt ein erfindungsgemäßes vernetztes Polyurethan vor, wenn der Anteil an gelösten Probenbestandteilen um vorzugsweise mindestens 10 Gew.-%, besonders bevorzugt mindestens 30 Gew.-% und insbesondere um mindestens 50 Gew.-%, bezogen auf das Gesamtgewicht des gelösten Pobenanteils des vernetzbaren Polyurethans, abnimmt.

Bei 30 und weniger Gew.-% vernetzbarem Polyurethan in Lösung wird die Vernetzung anhand der Quellung bestimmt. Dabei liegt ein vernetztes Polyurethan im Sinn der Erfindung vor, wenn der Anteil an Lösungsmittel in der gequollenen Probe, bestimmbar durch die Gewichtsdifferenz vor und nach dem Quellversuch, um vorzugsweise mindestens 10 Gew.-%, besonders bevorzugt mindestens 15 Gew.-% und insbesondere um mindestens 20 Gew.-%, abnimmt.

Die Vernetzung der Doppelbindungen des vernetzbaren Polyurethans gemäß der vorliegenden Erfindung kann dabei durch übliche, chemische Vulkanisationsmittel, wie Schwefel enthaltendes Vulkanisationsmittel oder Radikalstarter, wie Peroxide oder AIBN, enthaltendes Vulkanisationsmittel, erfolgen. Weiter kann eine Vernetzung auch durch Bestrahlung mit energiereicher Strahlung, beispielsweise UV-Licht, Elektronenstrahlen oder *β* - oder *γ* -Strahlung, erfolgen. Eine weitere Vernetzungsmöglichkeit ist die thermische Vernetzung bei Temperaturen von größer 150 ° C in Gegenwart von Sauerstoff. Daher wird im Rahmen der vorliegenden Erfindung auch ein Doppelbindungen enthaltendes Polyurethan ohne chemisches Vernetzungsmittel (d) als vernetzbares Polyurethan bezeichnet. Dabei erfolgt die erfindungsgemäße Vernetzung über chemische Vernetzungsmittel oder durch Bestrahlung mit hochenergetischer Strahlung, mehr bevorzugt durch chemische Vernetzungsmittel und insbesondere durch Schwefel enthaltendes Vulkanisationsmittel.

Erfolgt die Vernetzung durch übliche, chemische Vulkanisationsmittel kann das Vulkanisationsmittel bereits in der Reaktionsmischung zur Herstellung des vernetzbaren Polyurethans enthalten sein. In diesem Fall kann die Vernetzung auch durch die Wärmeentwicklung bei der Polyurethanherstellung gestartet werden. Dies kann beispielsweise bei der Herstellung von Gießelastomeren und insbesondere von Verbundstoffen von Gießelastomeren mit Gummi sinnvoll sein. Dies hat den Vorteil, dass zur Herstellung des vernetzten Polyurethans nur ein Reaktionsschritt erforderlich ist. Weiter ist bei der Herstellung der Verbundelemente eine besonders gute Haftung zwischen Gummi und vernetztem Polyurethan gegeben. Diese kann durch Co-Vulkanisation, bei der Kautschuk und vernetzbares Polyurethan in einem Schritt vernetzt werden, weiter verbessert werden. Dabei wird die Reaktionsmischung zur Herstellung des Polyurethans auf eine Vulkanisationsmischung enthaltende Kautschukmischung gegeben und die Vulkanisation des vernetzbaren Polyurethans und der Kautschukmischung gestartet. Gegebenenfalls kann die Vulkanisation auch in einer beheizten Presse oder Form erfolgen.

Alternativ kann bei dem Ausreagieren der Reaktionsmischung zum vernetzbaren Polyurethan darauf geachtet werden, dass die Vulkanisation nicht startet. Dies kann beispielsweise durch Temperaturkontrolle in einer Form erfolgen. Die Vulkanisation, beispielsweise bei der Herstellung von Verbundkörpern, kann dann unabhängig von der Herstellung des vernetzbaren Polyurethans unter üblichen Vulkanisationsbedingungen erfolgen. Ein Beispiel hierfür ist ein Heißklebstoff mit verbesserter Haftung auf Gummi, wobei die Einsatzstoffe zur Herstellung des vernetzbaren Polyurethans so gewählt werden, dass ein schmelzbarer Klebstoff entsteht, der thermisch aktivierbare Vulkanisationsmittel enthält. Durch das Aufschmelzen bei Temperaturen größer 140 ° C wird die Vernetzung gestartet.

Weiter kann bei thermoplastischem verarbeitbarem Polyurethan das Vulkanisationsmittel (d) nach der Herstellung des vernetzbaren Polyurethans eingebracht werden. Dies kann beispielsweise durch Extrusion, beispielsweise in einem Doppelschneckenextruder, erfolgen. Dabei ist darauf zu achten, dass die Extrusionstemperatur unter der Starttemperatur der Vernetzung liegt. Weiter kann das Vulkanisationsmittel auch durch eindiffundieren, beispielsweise durch quellen des vernetzbaren Polyurethans in einem, ein chemisches Vulkanisationsmittel enthaltenden Lösungsmittels, erfolgen.

In einer weiteren Ausführungsform erfolgt die Extrusion bei einer Temperatur, bei der die Vernetzung startet, allerdings erst nach der endgültigen Formgebung des vernetzten Polyurethans beendet ist. So kann beispielsweise ein Schlauch oder eine Kabelummantelung extrudiert werden, die anschließend selbstständig vernetzten.

Vernetzbares Polyurethan gemäß der vorliegenden Erfindung kann auch ein oder mehrere weitere Polymere, vorzugsweise in Form eines Blends, enthalten. Vorzugsweise handelt es sich bei dem weiteren Polymeren um einen Kautschuk. Beispielsweise kann ein solcher Blend durch Extrusion eines vernetzbaren Polymers und des weiteren Polymers oder durch Lösen des weiteren Polymers in einer der Komponenten a) bis h) erhalten werden. Vorzugsweise handelt es sich bei dem weiteren Polymer um eine oder mehrere Polymere, ausgewählt aus Kautschuken. Vorzugsweise beträgt der Anteil der weiteren Polymere, bezogen auf das Gesamtgewicht der Komponenten a) bis h), bis zu 100 Gew.-%, und vorzugsweise 10 bis 50 Gew.-%. In einer weiteren bevorzugten Ausführungsform der vorliegenden Erfindung enthält das vernetzbare Polyurethan keine weiteren Polymere. Vorzugsweise erfolgt bei Vernetzung des vernetzbaren Polyurethans auch eine Vernetzung des Kautschuks, so dass ein vernetzter Blend mit chemischen Bindungen von Molekülen des Polyurethans und des Gummis enthalten sind. Durch gezielte Auswahl und Kombination der Vulkanisationsbeschleuniger und der Menge an Schwefel kann die Art der Vernetzungsstellen gesteuert werden.

Dabei wird im Rahmen der vorliegenden Erfindung unter Kautschuk plastisch verformbare Elastomere verstanden, wie beispielsweise Butadien-Kautschuk (BR), Styrol-Butadien-Kautschuk (SBR), Isopren-Kautschuk (IR), Styrol-Isopren-Butadien-Kautschuk (SIBR), Acrylnitril-Butadien-Kautschuk (NBR), Chloropren-Kautschuk (CR), Isobuten-Isopren-Kautschuk (IIR), Naturkautschuk (NR), die sowohl rein, als auch in Blends untereinander vorliegen können. Die Elastomere enthalten dabei gegebenenfalls handelsübliche Füllstoffe, wie Ruße, Silica, Kreide, Metalloxide, Weichmacher, Antioxidationsmittel, Ozonschutzmittel und/oder thermoplastische Polymere, wie styrolhaltige Thermoplaste, beispielsweise Polystyrol oder Polystyrolacrylnitril (SAN), Ethylenvinylacetat (EVA), Polyethylen, Polypropylen, Polycarbonat, thermoplastisches Polyurethan (TPU), Polyvinylchlorid (PVC) oder thermoplastische Elastomere auf Basis von Styrol-Butadien-Styrol-Blockcopolymeren oder Styrol-Isopren-Styrol-Blockcopolymeren oder Blends aus den genannten Thermoplasten untereinander. Weiter können Kautschuke übliche Vulkanisationsmittel (d) enthalten.

Unter Gummi werden im Rahmen der vorliegenden Erfindung vernetzte Kautschukmischungen verstanden. Dabei sind unter vernetztem Kautschuk die reinen Elastomere oder Elastomerblends oder Elastomere oder Elastomerblends, die gegebenenfalls Füllstoffe enthalten können, insbesondere thermoplastische Polymere, zu verstehen, die mit Vulkanisationsbeschleunigern und/oder Vernetzern, beispielsweise auf Schwefel oder Peroxidbasis, vermischt und gemäß gängiger Praxis vulkanisiert sind. Solche Gummimischungen sind beispielsweise beschrieben in P.A. Ciullo, "The rubber formulary", Hoyes Publications, 1999, ISBN: 0-8155-1434-4. Besonders bevorzugt handelt es sich bei Gummi, um vulkanisierten Kautschuk, enthaltend Butadien-Kautschuk (BR), Styrol-Butadien-Kautschuk (SBR), Isopren-Kautschuk (IR), Styrol-Isopren-Butadien-Kautschuk (SIBR), Acrylnitril-Butadien-Kautschuk (NBR), Chloropren-Kautschuk (CR), Isobuten-Isopren-Kautschuk (IIR), und Naturkautschuk (NR), oder Mischungen daraus, die mit Vulkanisationsbeschleunigern und/oder Vernetzern auf Schwefel oder Peroxidbasis vermischt und gemäß gängiger Praxis vulkanisiert sind. Insbesondere wird als Gummi vulkanisierter Acrylnitril-Butadien-Kautschuk oder Styrol-Butadien-Kautschuk verwendet.

Als Polyisocyanate a) können dabei alle zur Polyurethanherstellung bekannten 2- oder höherwertigen Polyisocyanate eingesetzt werden. Diese umfassen die aus dem Stand der Technik bekannten aliphatischen, cycloaliphatischen und aromatischen zwei- oder mehrwertigen Isocyanate sowie beliebige Mischungen daraus. Beispiele sind 4,4'-Methandiphenyldiisocyanat, 2,4'-Methandiphenyldiisocyanat, die Mischungen aus monomeren Methandiphenyldiisocyanaten und höherkernigen Homologen des Methandiphenyldiisocyanats (Polymer-MDI), Tetramethylendiisocyanat, Hexamethylendiisocyanat (HDI), die Mischungen aus Hexamethylendiisocyanaten und höherkernigen Homologen des Hexamethylendiisocyanats (Mehrkern-HDI), Isophorondiisocyanat (IPDI), 2,4- oder 2,6-Toluylendiisocyanat (TDI), Naphtylendiisocyanat (NDI) oder Mischungen der genannten Isocyanate. Bevorzugt verwendet werden Toluylendiisocyanat (TDI), Diphenylmethandiisocyanat (MDI) und insbesondere Gemische aus Diphenylmethandiisocyanat und Polyphenylenpolymethylenpolyisocyanaten (Roh-MDI). Die Isocyanate können auch modifiziert sein, beispielsweise durch Einbau von Uretdion-, Carbamat-, Isocyanurat-, Carbodiimid-, Allophanat- und insbesondere Urethangruppen.

Besonders bevorzugt werden als Polyisocyanate (a) symmetrische Isocyanate eingesetzt. Dabei werden Polyisocyanate als symmetrische Isocyanate bezeichnet, wenn ihre Strukturformel mindestens eine Spiegelebene aufweist. Beispiele für solche symmetrischen Isocyanate sind 4,4'Methandiphenyldiisocyanat, 4,4'-H12-MDI, Hexamethylendiisocyanat, 2,6 TDI und 1,5-Naphthylendiisocyanat (1,5-NDI).

Dabei kann die Isocyanatkomponente A auch in Form von Isocyanatgruppenhaltigen Isocyanatprepolymeren eingesetzt werden. Diese Polyisocyanatprepolymere sind erhältlich, indem vorstehend beschriebene Polyisocyanate als Komponente A1 beispielsweise bei Temperaturen von 30 bis 100 ° C, bevorzugt bei etwa 80 ° C, im Überschuss mit Verbindungen der Komponente (b) und/oder (d) zum Prepolymer umgesetzt werden. Vorzugsweise werden dabei solche Mengenverhältnisse eingesetzt, dass der Isocyanatgruppengehalt des Prepolymers (im Folgenden auch als NCO-Gehalt bezeichnet) 3 bis 35 Gew.-%, bevorzugt 4 bis 30 Gew.-% und insbesondere 5 bis 20 Gew.-% beträgt.

Vorzugsweise wird zur Herstellung der Prepolymere 4,4'-MDI mit uretoniminmodifiziertem MDI und handelsüblichen Polyolen auf Basis von Polyestern, beispielsweise ausgehend von Adipinsäure, oder Polyethern, beispielsweise ausgehend von Ethylenoxid und/oder Propylenoxid, umgesetzt.

Besonders bevorzugt wird als Isocyanat 4,4'-MDI eingesetzt.

Die polymere Verbindungen mit im Mittel mindestens 1,5 gegenüber Isocyanatgruppen reaktiven Wasserstoffatomen (b) enthalten mindestens ein Dien-Blockcopolymer mit im Mittel mindestens 1,5 gegenüber Isocyanat reaktiven Wasserstoffatomen b1), das eine Polydien-Hauptkette, und mindestens eine Seiten- oder endständige Kette aus einem Polyether und/oder einem Polyester aufweist. Beispiele sind Alkylenoxidketten, Esterketten und insbesondere Estergruppen, die durch Ringöffnung eines cyclischen Esters, wie *ε* -Caprolacton, 1,6-Dioxacyclododecan-7,12-dion (CAS777-95-7) und Oxacyclodecan-2-on erhalten werden können. Dabei beträgt der Gewichtsanteil der Polydienkette, bezogen auf das Gesamtgewicht des Dien-Blockcopolymers b1) 25 bis 95 Gew.-%, vorzugsweise 40 bis 93 und besonders bevorzugt 50 bis 90 Gew.-%. Der Gewichtsanteil der Polyether und oder Polyesterkette beträgt 5 bis 75 Gew.-%, vorzugsweise 7 bis 60 Gew.-% und insbesondere 10 bis 50 Gew.-%. Eine Polydien-Hauptkette besteht beispielsweise aus Polybutadien, Polyisopren, Copolymeren aus Butadien und Isopren sowie Copolymeren aus Butadien und/oder Isopren und weiteren ungesättigten Monomeren, wie Styrol. Dabei beträgt der Anteil an Butadien und/oder Isopren in der Polydien-Hauptkette mit weiteren ungesättigten Monomeren mindestens 50 Gew.-%, bevorzugt mindestens 70 gew.-% und insbesondere mindestens 90 Gew.-%. Besonders bevorzugt wird als Polydien-Hauptkette Polybutadien eingesetzt. In einer ganz besonders bevorzugten Ausführungsform sind neben der Polydienkette und der Polyether und/ oder der Polyesterkette keine weiteren Monomereinheiten im Dien-Blockcopolymer b1) enthalten.

Erfindungsgemäße Dien-Blockcopolymere b1) weisen vorzugsweise ein zahlenmittleres Molekulargewicht von 600 bis 20 000 g/mol, besonders bevorzugt von 750 bis 10 000 g/mol und insbesondere von 1 000 bis 7 500 g/mol auf. Dabei beträgt die Anzahl der gegenüber Isocyanat reaktiven Wasserstoffatome pro Molekül, vorzugsweise die Hydroxylfunktionalität vorzugsweise 1,5 bis 5, besonders bevorzugt 2,0 bis 3,5 und insbesondere 2,0 bis 3,0. Vorzugsweise sind die Hydroxylgruppen zu mindestens 50 %, besonders bevorzugt zu mindestens 70 und insbesondere ausschließlich primäre Hydroxylgruppen. Soll eine thermoplastische Verarbeitung des vernetzbaren Polyurethans erfolgen ist es erforderlich, dass die Anzahl der gegenüber Isocyanat reaktiven Wasserstoffatome in der Verbindung b1) im Mittel 1,5 bis 2,2, vorzugsweise 1,8 bis 2,2, besonders bevorzugt 1,9 bis 2,1 und insbesondere 1,95 bis 2,01 beträgt.

Die Dien-Blockcopolymere b1) werden ausgehend von mit Hydroxylgruppen modifiziertem Dienpolymer erhalten. Diese sind kommerziell erhältlich. Geeignete Polydienole, insbesondere Polybutadienole, werden durch kontrollierte radikalische Polymerisation oder durch anionische Polymerisation hergestellt oder sind hydroxylmodifizierte Polybutadiene, die ausgehend von flüssigen Polybutadienen hergestellt werden, beispielsweise ausgehend von Produkten, die unter dem Handelsnamen Lithene®, Firma Synthomer, Essex, UK erhältlich sind.

Das Dienpolymer kann dabei beispielsweise durch anionische Polymerisation, ausgehend von einem difunktionellen oder polyfunktionellen Starter, beispielsweise 1,4-Dilithiumbutan, hergestellt wurden. Die Herstellung von hydroxylterminierten Polybutadienen ist beispielsweise in DD 154609 und DD 159775 beschrieben.

Hydroxylmodifizierte Polydienole können aus nicht funktionalisierten Polydienolpolymeren, beispielsweise Polybutadien, mit im Allgemeinen einem zahlenmittleren Molekulargewicht von 500 bis 15 000 g/mol, bevorzugt 750 bis 10 000 g/mol, besonders bevorzugt 1000 bis 7 500 g/mol und insbesondere 1000 bis 2000 g/mol hergestellt werden. Eine Möglichkeit ist eine Teilepoxidierung vorhandener Doppelbindungen und die anschließende Öffnung dieser Epoxide durch geeignete Nucleophile. Die Epoxidierung von Polydienen ist beispielsweise beschrieben in Perera, Ind. Eng. Chem. Res. 1988, 27, 2196-2203. Durch Umsetzung von Polydienpolymer mit Percarbonsäuren können epoxidierte Produkte erhalten werden. Dabei kann die Percarbonsäure direkt eingesetzt werden oder in situ aus der Carbonsäure und Wasserstoffperoxid generiert werden. Beispielsweise kann zur Epoxidierung Ameisensäure als einfachste Carbonsäure eingesetzt werden.

Epoxidierte Polydienpolymere können durch geeignete Nucleophile, wie Wasser, Alkohole oder Amine, zu hydroxylfunktionalisierten Polydienpolymeren umgesetzt werden. Bevorzugt sind Alkohole wie Ethanol und Butanol. Geeignete Katalysatoren für diese Reaktion sind starke Säuren wie Mineralsäuren, beispielsweise beschrieben in EP 0585265 B1, Bortrifluorid, beispielsweise beschrieben in US 5,242,989 oder Trifluormethansulfonsäure, beispielsweise beschrieben in WO 96/20234 sowie Li, J. Macromol. Sci, Part A, 2013, 50, 297-301.
Im Gegensatz zu den durch anionische oder radikalische Polymerisation hergestellten Hydroxyterminierten Dienpolymeren weisen die post-funktionalisierten Polydienpolyole Hydroxylgruppen nicht selektiv als Endgruppen auf, sondern statistisch verteilt über das Rückgrat des Polydienpolyols.

Zur Herstellung der Dien-Blockcopolymer mit mindestens zwei gegenüber Isocyanat reaktiven Wasserstoffatomen b1) werden die hydroxylfunktionalisierten Polydienpolymere zur Bildung des Etherblocks mit Alkylenoxiden unter Alkoxylierungsbedingungen umgesetzt. Dabei können übliche Alkylenoxide, beispielsweise Ethylenoxid oder Propylenoxyd, unter Verwendung eines Katalysators umgesetzt werden. Als Katalysator können übliche basische Katalysatoren, wie Kaliumhydroxid, oder Doppelmetallcyanidkatalysatoren eingesetzt werden. Polyesterblöcke können beispielsweise durch Reaktion mit aliphatischen oder aromatischen Dicarbonsäuren und mehrwertigen Alkoholen unter Veresterungsbedingungen erhalten werden.

Vorzugsweise enthalten die Dien-Blockcopolymere (b1) Endgruppen, die durch Reaktion mit einem cyclischen Ester erhalten werden. Dazu werden die durch anionische oder radikalische Polymerisation hergestellten Polydienpolymere oder die durch Epoxidierung erhaltenen post-funktionalisierten Polydienpolymere durch ringöffnende Co-Polymerisation mit einem cyclischen Ester, beispielsweise *ε* -Caprolacton 1,6-Dioxacyclododecan-7,12-dion oder Oxacyclodecan-2-on, vorzugsweise *ε* -Caprolacton, in Gegenwart eines Katalysators polyestermodifiziert. Als Katalysatoren kommen Titan-Katalysatoren wie Titantetrabutoxid, zum Einsatz, wie in JP-A 60023418 beschrieben.

Als weitere polymere Verbindungen mit im Mittel mindestens 1,5 gegenüber Isocyanat reaktiven Wasserstoffatomen (b2) können alle bekannten Verbindungen mit gegenüber Isocyanaten reaktiven Wasserstoffatomen eingesetzt werden, beispielsweise solche mit einer mittleren Funktionalität von 2 bis 8 und einem zahlenmittleren Molekulargewicht von 400 bis 15000 g/mol. So können beispielsweise Verbindungen, ausgewählt aus der Gruppe der Polyetherpolyole, Polyesterpolyole oder Mischungen daraus, verwendet werden.

Polyetherole werden beispielsweise hergestellt aus Epoxiden, wie Propylenoxid und/oder Ethylenoxid, oder aus Tetrahydrofuran mit wasserstoffaktiven Starterverbindungen, wie aliphatischen Alkoholen, Phenolen, Aminen, Carbonsäuren, Wasser oder Verbindungen auf Naturstoffbasis, wie Saccharose, Sorbit oder Mannit, unter Verwendung eines Katalysators. Zu nennen sind hier basische Katalysatoren oder Doppelmetallcyanidkatalysatoren, wie beispielweise in PCT/EP2005/010124, EP 90444 oder WO 05/090440 beschrieben.

Polyesterole werden z.B. hergestellt aus aliphatischen oder aromatischen Dicarbonsäuren und mehrwertigen Alkoholen, Polythioetherpolyolen, Polyesteramiden, hydroxylgruppenhaltigen Polyacetalen und/oder hydroxylgruppenhaltigen aliphatischen Polycarbonaten, vorzugsweise in Gegenwart eines Veresterungskatalysators. Weitere mögliche Polyole sind beispielsweise im "Kunststoffhandbuch, Band 7, Polyurethane", Carl Hanser Verlag, 3. Auflage 1993, Kapitel 3.1 angegeben. In einer bevorzugten Ausführungsform enthalten die polymeren Verbindungen mit im Mittel mindestens 1,5 gegenüber Isocyanat reaktiven Wasserstoffatomen (b2) polytetramethylenglycol (poly THF) mit einem mittleren Molekulargewicht von vorzugsweise 400 bis 6000 g/mol, besonders bevorzugt 500 bis 2500 g/mol und insbesondere 800 bis 2000 g/mol.

Der Anteil der polymeren Verbindungen mit mindestens zwei gegenüber Isocyanat reaktiven Wasserstoffatomen (b2), bezogen auf das Gesamtgewicht der Komponente b) beträgt vorzugsweise 0 bis 70 Gew.-%, besonders bevorzugt 0 bis 50 Gew.-% und insbesondere 0 bis 40 Gew.-%. In einer ganz besonders bevorzugten Ausführungsform wird keine weitere polymere Verbindungen mit mindestens zwei gegenüber Isocyanat reaktiven Wasserstoffatomen (b2) eingesetzt.

Die Ermittlung des Molekulargewichts der Verbindungen der Komponente b) erfolgt durch Bestimmung der OH-Zahl.

Als Katalysatoren c) können übliche Verbindungen eingesetzt werden, die die Reaktion der polymere Verbindungen mit mindestens zwei gegenüber Isocyanatgruppen reaktiven Wasserstoffatomen (b) und gegebenenfalls Kettenverlängerungs- und Vernetzungsmittel (e) sowie chemischem Treibmittel (f) mit den organischen, gegebenenfalls modifizierten Polyisocyanaten (a) stark beschleunigen.

Genannt seien beispielsweise Amidine, wie 2,3-Dimethyl-3,4,5,6-tetrahydropyrimidin, tertiäre Amine, wie Triethylamin, Tributylamin, Dimethylbenzylamin, N-Methyl-, N-Ethyl-, N-Cyclohexylmorpholin, N,N,N',N'-Tetramethylethylendiamin, N,N,N',N'-Tetramethyl-butandiamin, N,N,N',N'-Tetramethyl-hexandiamin, Pentamethyl-diethylentriamin, Tetramethyl-diaminoethylether, Bis-(dimethylaminopropyl)-harnstoff, Dimethylpiperazin, 1,2-Dimethylimidazol, 1-Aza-bicyclo-(3,3,0)-octan und vorzugsweise 1,4-Diaza-bicyclo-(2,2,2)-octan und Alkanolaminverbindungen, wie Triethanolamin, Triisopropanolamin, N-Methyl- und N-Ethyl-diethanolamin und Dimethylethanolamin. Ebenso kommen in Betracht organische Metallverbindungen, vorzugsweise organische Zinnverbindungen, wie Zinn-(II)-salze von organischen Carbonsäuren, z.B. Zinn-(II)-acetat, Zinn-(II)-octoat, Zinn-(II)-ethylhexoat und Zinn-(II)-laurat und die Dialkylzinn-(IV)-salze von organischen Carbonsäuren, z.B. Dibutylzinndiacetat, Dimethylzinndilaurat, Dibutylzinndilaurat, Dibutylzinn-maleat und Dioctylzinn-diacetat, sowie Bismutcarboxylate, wie Bismut(III)-neodecanoat, Bismut-2-ethylhexanoat und Bismut-octanoat oder Mischungen davon. Die organischen Metallverbindungen können allein oder vorzugsweise in Kombination mit stark basischen Aminen eingesetzt werden. Handelt es sich bei der Komponente (b) um einen Ester, werden vorzugsweise ausschließlich Aminkatalysatoren eingesetzt. In einer besonders bevorzugten Ausführungsform werden ausschließlich einbaubare Katalysatoren als Katalysatoren (c) eingesetzt.

Werden Katalysatoren (c) eingesetzt, können diese beispielsweise in einer Konzentration von 0,001 bis 5 Gew.-%, insbesondere 0,05 bis 2 Gew.-% als Katalysator bzw. Katalysatorkombination, bezogen auf das Gewicht der Komponente (b) eingesetzt werden.

Als Vulkanisationsmittel (d) werden übliche Vulkanisationspakete, beispielsweise auf Basis von Schwefel oder Peroxiden, eingesetzt. Beispiele für Schwefel enthaltende Vulkanisationsmittel sind elementarer Schwefel oder ein Schwefel lieferndes Vulkanisationsmittel, wie Amindisulfid, polymeres Polysulfid oder Schwefel-Olefinaddukte sowie Mischungen daraus. Dabei wird das Schwefelbasierte Vulkanisationsmittel beispielsweise in Mengen von 0,5 bis 6 Gew.-%, vorzugsweise 0,75 bis 4,0 Gew.-%, jeweils bezogen auf das Gesamtgewicht der Komponenten (a), (b), (c), (d) und (e), eingesetzt. Peroxidisches Vulkanisationsmittel wird beispielsweise eingesetzt in Mengen von 0,01 bis 20 Gew.-%, vorzugsweise 0,05 bis 10 Gew.-% und besonders bevorzugt 0,1 bis 5 Gew.-%, jeweils bezogen auf das Gesamtgewicht der Komponenten (a), (b), (c), (d) und (e).

Als Peroxid enthaltende Vulkanisationsmittel können alkoxybasierte organische Peroxide, wie Di-tertiärbutylperoxid, Dicumylperoxid, 2,5-Bis(tertiärbutylperoxy)2,5-dimethylhexan, -Bis-(tertiärbutylperoxy)diisopropylbenzol, Tertiärbutylcumylperoxid und 2,5-Dimethyl-2,5(ditertiärbutylperoxyhexyn-3, eingesetzt werden. Typischerweise werden zusätzlich zu den Peroxiden reaktive Coagentien, wie multifunktionelle Acrylate oder Methacrylatester, allycyclische Verbindungen oder Bismaleimide eingesetzt. Aktive Peroxyde werden üblicherweise in Mengen von 1 bis 20 Gew.-%, bezogen auf das Gesamtgewicht der Komponenten (a), (b), (c) und (e) und Coagents in Mengen von 1 bis 50 Gew.-%, bezogen auf das Gesamtgewicht der Komponenten (a), (b), (c) und (e), eingesetzt.

Erfindungsgemäß können bei der Herstellung der erfindungsgemäßen Polyurethane auch Vulkanisationsverzöger eingesetzt werden, wie z.B. Phthalsäureanhydrid, Benzoesäureanhydrid, Sulfonamid-Derivate oder Phthalimidsulfenamide (z.B. N-Cyclohexylthiophthalimid (CTP)).

Als Kettenregler, Kettenverlängerer oder Vernetzer (e) können Substanzen mit einem Molekulargewicht von 62 bis 400 g/mol, besonders bevorzugt von 62 bis 350 g/mol eingesetzt werden, wobei Kettenregler ein gegenüber Isocyanaten reaktives Wasserstoffatom, Kettenverlängerer 2 gegenüber Isocyanaten reaktive Wasserstoffatome und Vernetzer 3 gegenüber Isocyanat reaktive Wasserstoffatome aufweisen. Diese können einzeln oder bevorzugt in Form von Mischungen eingesetzt werden. Vorzugsweise werden Diamine, Diole und/oder Triole mit Molekulargewichten kleiner als 400, besonders bevorzugt von 62 bis 400 und insbesondere von 62 bis 350 eingesetzt. In Betracht kommen beispielsweise aliphatische, cycloaliphatische und/oder araliphatische oder aromatische Diamine und Diole mit 2 bis 14, vorzugsweise 2 bis 10 Kohlenstoffatomen, wie Diethyltoluoldiamine (DEDTA), m-Phenylendiamine, Ethylenglykol, 1,2-Propandiol, 2-Methyl-1,3-Propandiol, 1,3-propandiol, 1,4-Butandiol, 1,6-Hexandiol, 1,10-Decandiol und Bis-(2-hydroxyethyl)-hydrochinon (HQEE), 1,2-, 1,3-, 1,4-Dihydroxycyclohexan, Bisphenol-A-bis(hydroxyethylether), Diethylenglykol, Dipropylenglykol, Tripropylenglykol, Triole, wie 1,2,4-, 1,3,5-Trihydroxycyclohexan, Glycerin und Trimethylolpropan, Diethanolamine, Triethanolamine, und niedermolekulare hydroxylgruppenhaltige Polyalkylenoxide auf Basis Ethylen- und/oder 1,2-Propylenoxid und den vorgenannten Diolen und/oder Triolen als Startermoleküle. Besonders bevorzugt werden als Vernetzer (e) niedermolekulare hydroxylgruppenhaltige Polyalkylenoxide auf Basis von Ethylen- und/oder 1,2-Propylenoxid, besonders bevorzugt von Ethylen, und trifunktionellen Startern, insbesondere Glycerin und Trimethylolpropan, eingesetzt. Besonders bevorzugte Kettenverlängerer (e) sind Ethylenglykol, 1,2-Propandiol, 1,3-Propandiol, 2-Methyl-1,3-Propandiol, 1,4-Butadiol, Diethylenglykol, Bis-(2-hydroxyethyl)-hydrochinon und Dipropylenglykol.

Wird Kettenverlängerer und/oder Vernetzer (e) eingesetzt, beträgt der Anteil der Kettenverlängerer und/ oder Vernetzer (e) üblicherweise 1 bis 50, vorzugsweise 2 bis 20 Gew.-%, bezogen auf das Gesamtgewicht der Komponenten (a), (b), (c) und (e). Vorzugsweise werden keine Vernetzer (e) eingesetzt.

Als Kettenregler kann beispielsweise 1-Oktanol eingesetzt werden. Werden Kettenregler eingesetzt, werden diese üblicherweise in einer Menge von 0,1 bis 5 Gew. %, bezogen auf das Gesamtgewicht der Komponenten (b) bis (e), eingesetzt.

Wenn das erfindungsgemäße Polyurethan als Polyurethan-Schaumstoff vorliegen soll, enthalten erfindungsgemäße Reaktionsmischungen noch Treibmittel (f). Dabei können alle zur Herstellung von Polyurethanen bekannten Treibmittel eingesetzt werden. Diese können chemische und/oder physikalische Treibmittel enthalten. Solche Treibmittel werden beispielsweise im "Kunststoffhandbuch, Band 7, Polyurethane", Carl Hanser Verlag, 3. Auflage 1993, Kapitel 3.4.5 beschrieben. Unter chemischen Treibmitteln werden dabei Verbindungen verstanden, die durch Reaktion mit Isocyanat gasförmige Produkte bilden. Beispiele für solche Treibmittel sind Wasser oder Carbonsäuren. Unter physikalischen Treibmitteln werden dabei Verbindungen verstanden, die in den Einsatzstoffen der Polyurethan-Herstellung gelöst oder emulgiert sind und unter den Bedingungen der Polyurethanbildung verdampfen. Dabei handelt es sich beispielsweise um Kohlenwasserstoffe, halogenierte Kohlenwasserstoffe und andere Verbindungen, wie zum Beispiel perfluorierte Alkane, wie Perfluorhexan, Fluorchlorkohlenwasserstoffe, und Ether, Ester, Ketone, Acetale und/oder flüssiges Kohlendioxid. Bevorzugte Beispiele für physikalische Treibmittel sind Propan, n-Butan, iso- und Cyclobutan , n-, iso- und Cyclopentan, Cyclohexan, Dimethylether, Methylethylether, Methylbutylether, Ameisensäuremethylester, Tertiarbutanol, Aceton sowie Fluoralkane, die in der Troposphäre abgebaut werden können und deshalb für die Ozonschicht unschädlich sind, wie Trifluormethan, Difluormethan, 1,1,1,3,3-Pentafluorbutan, 1,1,1,3,3-Pentafluorpropan, 1,1,1,2,3-Pentafluorpropen, 1-Chlor-3,3,3-trifluorpropen, 1,1,1,2-Tetrafluorethan, Difluorethan und 1,1,1,2,3,3,3-Heptafluorpropan sowie Perfluoralkane, wie, C₃F₈, C₄F₁₀, C₅F₁₂, C₆F₁₄, und C₇F₁₇. Besonders bevorzugt sind Kohlenwasserstoffe, vorzugsweise Pentane, insbesondere Cyclopentan. Die genannten physikalischen Treibmittel können allein oder in beliebigen Kombinationen untereinander eingesetzt werden.

Dabei kann das Treibmittel in jeder beliebigen Menge eingesetzt werden. Vorzugsweise wird das Treibmittel in einer Menge eingesetzt, dass der resultierende Polyurethanschaumstoff eine Dichte von 10 bis 850 g/L, besonders bevorzugt 20 bis 800 g/L und insbesondere 25 bis 500 g/L aufweist. Besonders bevorzugt werden Treibmittel, enthaltend Wasser eingesetzt. Vorzugsweise werden keine Treibmittel f) eingesetzt.

Der Reaktionsmischung zur Herstellung der Polyurethanschäume können gegebenenfalls auch noch Hilfsmittel und/oder Zusatzstoffe (g) zugegeben werden. Genannt seien als Hilfsmittel und/oder Zusatzstoffe E beispielsweise oberflächenaktive Substanzen, Schaumstabilisatoren, Zellregler, weitere Trennmittel, Füllstoffe, Farbstoffe, Pigmente, Hydrolyseschutzmittel, flammhemmende Mittel, geruchsabsorbierende Substanzen und fungistatische und/oder bakteriostatisch wirkende Substanzen.

Als oberflächenaktive Substanzen kommen z.B. Verbindungen in Betracht, welche zur Unterstützung der Homogenisierung der Ausgangsstoffe dienen und gegebenenfalls auch geeignet sind, die Zellstruktur zu regulieren. Genannt seien beispielsweise Emulgatoren, wie die Natriumsalze von Ricinusölsulfaten oder von Fettsäuren, sowie Salze von Fettsäuren mit Aminen, z.B. ölsaures Diethylamin, stearinsaures Diethanolamin, ricinolsaures Diethanolamin, Salze von Sulfonsäuren, z.B. Alkali- oder Ammoniumsalze von Dodecylbenzol- oder Dinaphthylmethandisulfonsäure, und Ricinolsäure; Schaumstabilisatoren, wie Siloxan-Oxalkylen-Mischpolymerisate und andere Organopolysiloxane, oxethylierte Alkylphenole, oxethylierte Fettalkohole, Paraffinöle, Ricinusöl- bzw. Ricinolsäureester, Türkischrotöl und Erdnussöl, und Zellregler, wie Paraffine, Fettalkohole und Dimethylpolysiloxane. Zur Verbesserung der Emulgierwirkung, der Zellstruktur und/oder Stabilisierung des Schaumes eignen sich ferner oligomere Acrylate mit Polyoxyalkylen- und Fluoralkanresten als Seitengruppen. Die oberflächenaktiven Substanzen werden üblicherweise in Mengen von 0,01 bis 5 Gew.-Teilen, bezogen auf 100 Gew.-Teile der Komponente B und gegebenenfalls C, eingesetzt. Vorzugsweise werden keine oberflächenaktiven Substanzen eingesetzt.

Als geeignete weitere Trennmittel seien beispielhaft genannt: Umsetzungsprodukte von Fettsäureestern mit Polyisocyanaten, Salze aus Aminogruppen enthaltenden Polysiloxanen und Fettsäuren, Salze aus gesättigten oder ungesättigten (cyclo)aliphatischen Carbonsäuren mit mindestens 8 C-Atomen und tertiären Aminen sowie insbesondere innere Trennmittel, wie Carbonsäureester und/oder - amide, hergestellt durch Veresterung oder Amidierung einer Mischung aus Montansäure und mindestens einer aliphatischen Carbonsäure mit mindestens 10 C-Atomen mit mindestens difunktionellen Alkanolaminen, Polyolen und/oder Polyaminen mit Molekulargewichten von 60 bis 400 g/mol, wie beispielsweise in EP 153 639 offenbart, Gemischen aus organischen Aminen, Metallsalzen der Stearinsäure und organischen Mono- und/oder Dicarbonsäuren oder deren Anhydride, wie beispielsweise in DE-A-3 607 447 offenbart, oder Gemischen aus einer Iminoverbindung, dem Metallsalz einer Carbonsäure und gegebenenfalls einer Carbonsäure, wie beispielsweise in US 4 764 537 offenbart. Vorzugsweise enthalten erfindungsgemäße Reaktionsmischungen keine weiteren Trennmittel. Insbesondere wenn Haftung zu Gummi erzeugt werden soll werden vorzugsweise keine Trennmittel eingesetzt.

Als Füllstoffe, insbesondere verstärkend wirkende Füllstoffe, sind die an sich bekannten, üblichen organischen und anorganischen Füllstoffe, Verstärkungsmittel, Beschwerungsmittel, Beschichtungsmittel usw. zu verstehen. Im Einzelnen seien beispielhaft genannt: anorganische Füllstoffe, wie silikatische Mineralien, beispielsweise Schichtsilikate, wie Antigorit, Bentonit, Serpentin, Hornblenden, Amphibole, Chrisotil und Talkum, Metalloxide, wie Kaolin, Aluminiumoxide, Titanoxide, Zinkoxid und Eisenoxide, Metallsalze wie Kreide und Schwerspat, und anorganische Pigmente, wie Cadmiumsulfid, Zinksulfid sowie Glas u.a. Vorzugsweise verwendet werden Kaolin (China Clay), Aluminiumsilikat und Copräzipitate aus Bariumsulfat und Aluminiumsilikat. Auch können anorganische Fasern zugesetzt werde, zum Beispiel Glasfasern. Als organische Füllstoffe kommen beispielsweise in Betracht: Russ, Melamin, Kollophonium, Cyclopentadienylharze und Pfropfpolymerisate sowie Cellulosefasern, Polyamid-, Polyacryl
nitril-, Polyurethan-, Polyesterfasern auf der Grundlage von aromatischen und/oder aliphatischen Dicarbonsäureestern und insbesondere Kohlenstofffasern.

Die anorganischen und organischen Füllstoffe können einzeln oder als Gemische verwendet werden und werden der Reaktionsmischung vorteilhafterweise in Mengen von 0,5 bis 50 Gew.-%, vorzugsweise 1 bis 40 Gew.-%, bezogen auf das Gewicht der Komponenten A bis D, zugegeben. Dabei können die Füllstoffpartikel auch oberflächenmodifiziert werden, um eine Agglomeration der Partikel zu verhindern. Solche Modifikationen sind bekannt, und werden bei der Gummiproduktion üblicherweise angewandt. Dabei können die Füllstoffpartikel, insbesondere Silikatpartikel, mit physikalisch gebundenen Beschichtungsmitteln oder mit chemisch gebundenen Beschichtungsmitteln oberflächenmodifiziert werden. Physikalische Beschichtungen sind beispielsweise in EP 341383 und chemische Beschichtung, beispielsweise mit Silanolen, Organosilanen, Silikonen oder Chlorsilanen, in EP672731 beschrieben. Besonders bevorzugt ist mit Bis(triethoxysilylpropyl)tetrasulan oberflächenmodifiziertes Silikat.

Bei der Herstellung der erfindungsgemäßen vernetztbaren Polyurethane werden üblicherweise die polymeren Verbindungen mit mindestens zwei gegenüber Isocyanaten reaktiven Gruppen (b), die gegebenenfalls eingesetzten Katalysatoren (c), die gegebenenfalls vorhandenen Vulkanisationsmittel (d), die gegebenenfalls eingesetzten Kettenverlängerer und/oder Vernetzungsmittel (e), die gegebenenfalls eingesetzten (f) Treibmittel und die gegebenenfalls eingesetzten Hilfsmittel und/oder Zusatzstoffe (g) zu einer sogenannten Polyolkomponente vermischt und in dieser Form mit den Polyisocyanaten (a) zur Umsetzung gebracht.

Als Kautschuk können die eingangs genannten Kautschuke eingesetzt werden. Vorzugsweise werden als Kautschuk Butadien-Kautschuk (BR), Styrol-Butadien-Kautschuk (SBR), Isopren-Kautschuk (IR), Styrol-Isopren-Butadien-Kautschuk (SIBR), Acrylnitril-Butadien-Kautschuk (NBR), Chloropren-Kautschuk (CR), Isobuten-Isopren-Kautschuk (IIR), Naturkautschuk (NR), die sowohl rein, als auch in Blends untereinander vorliegen können. Die Elastomere enthalten dabei gegebenenfalls handelsübliche Füllstoffe, wie Ruße, Silica, Kreide, Metalloxide, Weichmacher, Antioxidationsmittel, Ozonschutzmittel und/oder thermoplastische Polymere, wie styrolhaltige Thermoplaste, beispielsweise Polystyrol oder Polystyrolacrylnitril (SAN), Ethylenvinylacetat (EVA), Polyethylen, Polypropylen, Polycarbonat, thermoplastisches Polyurethan (TPU), Polyvinylchlorid (PVC) oder thermoplastische Elastomere auf Basis von Styrol-Butadien-Styrol-Blockcopolymeren oder Styrol-Isopren-Styrol-Blockcopolymeren oder Blends aus den genannten Thermoplasten untereinander. Besonders bevorzugt wird als Kautschuk (h) Polybutadien, Polyisopren oder Copolymere aus Isopren und Butadien, insbesondere Polybutadien eingesetzt. Ist Kautschuk enthalten, beträgt der Anteil von Kautschuk (h), bezogen auf das Gesamtgewicht der Komponenten a) bis h) vorzugsweise bis zu 100 Gew.-% und besonders bevorzugt 10 bis 50 Gew.-%. In einer weiteren bevorzugten Ausführungsform der vorliegenden Erfindung enthält das vernetzbare Polyurethan keinen Kautschuk (h).

Zur Herstellung der erfindungsgemäßen vernetzbaren Polyurethane werden die Polyisocyanatprepolymere mit den polymeren Verbindungen mit gegenüber Isocyanaten reaktiven Gruppen, Katalysatoren (c), Vulkanisationsmittel (d), Kettenverlängerer und/oder Vernetzungsmittel (e), Treibmittel (f) und die gegebenenfalls eingesetzten Hilfsmittel und/oder Zusatzstoffe (g) vermischt und zur Reaktion gebracht. Dabei werden die Mischungsverhältnisse so gewählt, dass das Äquivalenz-Verhältnis von NCO-Gruppen der Polyisocyanate (a) zur Summe der reaktiven Wasserstoffatome der Komponenten (b) und, falls vorhanden, (e) und (f) vorzugsweise 0,65 bis 2,0 zu 1, vorzugsweise 0,7 bis 1,5 zu 1 und insbesondere 0,9 bis 1,1 zu 1 beträgt. Ein Verhältnis von 1 zu 1 entspricht dabei einem Isocyanatindex von 100.

Die Herstellung der erfindungsgemäßen vernetzbaren Polyurethane erfolgt vorzugsweise nach dem one-shot-Verfahren, beispielsweise mit Hilfe der Hochdruck- oder Niederdrucktechnik. Die Polyurethane können in offenen oder geschlossenen metallischen Formwerkzeugen oder durch das kontinuierliche Auftragen des Reaktionsgemisches auf Bandstraßen oder in Wannen hergestellt werden.

Besonders vorteilhaft ist es, nach dem sogenannten Zweikomponentenverfahren zu verfahren, bei dem, wie oben ausgeführt, eine Polyolkomponente hergestellt und mit Polyisocyanat a) vermischt wird.

Die Umsetzung der Komponenten kann prinzipiell unter an sich bekannten Reaktionsbedingungen durchgeführt werden. Insbesondere sofern das Polyurethan ein thermoplastisches Polyurethan ist, kann die Umsetzung dabei diskontinuierlich oder auch kontinuierlich erfolgen, beispielsweise in einem Bandverfahren oder einem Reaktionsextrusionsverfahren. Geeignete Verfahren werden beispielsweise beschrieben in EP 0 922 552 A1 oder WO 2006/082183 A1.

Dabei wird beispielsweise bei der Umsetzung zur Herstellung eines thermoplastischen Polyurethans die Reaktion derart geführt, dass die Verarbeitungstemperatur unterhalb von 240° C liegt, beispielsweise im Bereich von 100 ° C bis 220 ° C liegt, bevorzugt im Bereich von 110 ° C bis 190 ° C, weiter bevorzugt im Bereich von 120 ° C bis 170° C, besonders bevorzugt im Bereich von 130 ° C bis 150° C. Bevorzugt wird die Umsetzung mittels Reaktionsextrusionsverfahren durchgeführt. Erfindungsgemäß ist es auch möglich, dass das Verfahren, insbesondere bei der Herstellung eines thermoplastischen Polyurethans, weitere Schritte umfasst, beispielsweise eine Vorbehandlung der Komponenten oder eine Nachbehandlung des erhaltenen Polyurethans. Beispielsweise kann das nach der Umsetzung das erhaltene thermoplastische Polyurethan getempert werden.

Erfindungsgemäßes vernetztes Polyurethan hat hervorragende Eigenschaften, wie eine hohe Nassrutschfestigkeit, einen geringen Rollwiderstand, einen geringen Abrieb, ein hohes Modul sowie eine gute Haptik. Weiter zeigen die erfindungsgemäßen vernetzten Polyurethane hervorragende mechanische Eigenschaften, wie eine hohe Elastizität, ein gutes Rückstellvermögen, eine hohe Druckfestigkeit und hervorragende Dimensionsstabilität, auch bei erhöhten Temperaturen und eignet sich daher zum Einsatz bei der Herstellung von Reifen oder Reifenteilen, Kabelummantelungen, Dichtungen, Schuhsohlen, Rollen oder Schläuchen.

In einer besonders bevorzugten Ausführungsform wird ein Verbundstoff aus vernetzten Polyurethan und Gummi hergestellt. Dazu wird das vernetzbare Polyurethan auf Gummi oder vorzugsweise auf Kautschuk aufgebracht und vernetzt. Dies kann in den eingangs beschriebenen Varianten erfolgen. Vorzugsweise werden dabei das vernetzbare Polyurethan und der Kautschuk gleichzeitig vernetzt, wobei vorzugsweise übliche chemische Vulkanisationsmittel eingesetzt werden. Erfindungsgemäße Verbundteile aus Gummi und vernetztem Polyurethan zeigen hervorragende Haftungswerte und sind beispielsweise einsetzbar als Reifen oder Schuhsohlen. Dabei können die hervorragenden Gummieigenschaften, wie Nassrutschfestigkeit mit den guten mechanischen Eigenschaften von Polyurethanen, wie einem verbesserten Modulus, kombiniert werden, was es beispielsweise erlaubt Reifen mit einem verringerten Rollwiderstand und einer hervorragenden Haftung, insbesondere bei Nässe zu erhalten.

Eine weitere Möglichkeit zur Verbesserung der Haftung zwischen Polyurethan und Gummi ist der Einsatz von vernetzbarem Polyurethan als Zwischenschicht zwischen Gummi bzw. vorzugsweise Vulkanisationsmittel enthaltendem Kautschuk und konventionellem Polyurethan. Dabei kann in einem ersten Schritt ein Verbundkörper aus Gummi und dem vernetzbaren Polyurethan hergestellt werden. Auf das vernetzbare Polyurethan wird dann ein geschmolzenes thermoplastisches Polyurethan oder eine Reaktionsmischung zur Herstellung eines Polyurethans gegeben, welche dann zum Polyurethan ausreagiert wird. Die Vernetzung kann dann durch geeignete Bedingungen während oder nach der Herstellung des Verbundkörpers erfolgen, wodurch beispielsweise die Haftung zwischen Gummi und Polyurethan erhöht werden kann.
Ebenfalls sind Blends aus vernetztem Polyurethan und Gummi erhältlich. Dabei werden thermoplastisches, vernetzbares Polyurethan und Kautschuk bei Temperaturen unterhalb der Temperatur, die zu einem Start der Vernetzung führt Coextrudiert und anschließend vernetzt. Dabei ist vorzugsweise bei der Coextrusion übliches Vulkanisationsmittel enthalten. Solche erfindungsgemäßen Blends zeigen ebenfalls hervorragende mechanische Eigenschaften, wie eine hohe Elastizität, ein gutes Rückstellvermögen, eine hohe Druckfestigkeit und hervorragende Dimensionsstabilität, auch bei erhöhten Temperaturen.

Überraschender Weise hat sich gezeigt, dass die erfindungsgemäßen thermoplastischen Polyurethane bzw. die nach einem erfindungsgemäßen Verfahren erhaltenen thermoplastischen Polyurethane gut für die Herstellung von geschäumten Materialien geeignet sind. Dabei können die erfindungsgemäßen thermoplastischen Polyurethane in an sich bekannter Weise zu geschäumten Materialien verarbeitete werden. Dabei werden gegebenenfalls Zusatzstoffe wie Treibmittel, Zellreglern, oberflächenaktiven Substanzen, Nukleationsmittel, Füllstoffen, Mikrohohlkugeln und/oder Trennmittel eingesetzt. Geeignete Verfahren und Zusatzstoffe sind beispielsweise in der WO2014/198779 A1, in WO 2007/082838 A1 oder WO 94/20568 A1 offenbart.

Somit betrifft die vorliegende Erfindung gemäß einem weiteren Aspekt auch die Verwendung eines thermoplastischen Polyurethans wie zuvor beschrieben oder eines thermoplastischen Polyurethans erhältlich oder erhalten nach einem erfindungsgemäßen Verfahren zur Herstellung von geschäumten Folien, geschäumten Formteilen oder geschäumten Partikeln sowie den daraus erhältlichen Partikelschäumen.

Gemäß einer weiteren Ausführungsform betrifft die vorliegende Erfindung auch die Verwendung eines thermoplastischen Polyurethans wie zuvor beschrieben oder eines thermoplastischen Polyurethans erhältlich oder erhalten nach einem erfindungsgemäßen Verfahren zur Herstellung von geschäumten Folien, geschäumten Formteilen oder geschäumten Partikeln sowie den daraus erhältlichen Partikelschäumen, wobei die geschäumten Folien, geschäumten Formteile oder geschäumten Partikel und daraus erhältlichen Partikelschäume mit Füllstoffen verstärkt sind.

Die Vorteile der vorliegenden Erfindung werden im Folgenden im Rahmen von Beispielen erläutert:
1. Herstellbeispiel
Folgende Einsatzstoffe wurden eingesetzt:

| | |
|---|---|
| Polyol 1: | Polybutadienpolyol, hergestellt mittels einer anionischen Polymerisation, mit einer Funktionalität von 1,9, mit ausschließlich primären OH-Gruppen und einer OH-Zahl von 53,8 |
| Polyol 2: | Polybutadienpolyol, hergestellt mittels einer radikalischen Polymerisation, mit einer Funktionalität von 2,4, mit ausschließlich primären OH-Gruppen und einer OH-Zahl von 52,5 |
| Polyol 3: | Polyol hergestellt aus Polyol 1, gecappt mit 30 w% Polycaprolacton |
| Polyol 4: | Polyol hergestellt aus Polyol 2, gecappt mit 30 w% Polycaprolacton |
| Polyol 5: | Polyetherpolyol mit einer OH- Zahl von 55,8 und ausschließlich primären OH-Gruppen (basierend auf Tetramethylenoxid, Funktionalität: 2) |
| Isocyanat 1: | aromatisches Isocyanat (4,4'-Methylendiphenyldiisocyanat) |
| Isocyanat 2: | Mischung aus aromatischem Isocyanatprepolymer auf Basis von MDI und Polypropylenglycol und Carbodiimidmodifiziertem MDI, NCO-Gehalt ca. 26 Gew.-% |
| Kettenverlängerer 1 (KV 1): | 1,4-Butandiol |
| Kettenverlängerer 2 (KV 2): | 1,5-Pentandiol |
| Kettenverlängerer 3 (KV 3): | 1,6-Hexandiol |
| Kettenverlängerer 4 (KV 4): | Glycerin |
| Kettenregler 1 (KR 1): | 1-Oktanol |
| Entschäumer: | Xiameter Antifoam der Firma Dow Corning |
| Katalysator: | Metallkatalysator |
| Kautschuk 1: | Naturkautschuk (Neorub 340 P®, käuflich erwerblich von der Firma Weber & Schaer) |
| Kautschuk 2: | Nitril-Butadien-Kautschuk (Perbunan NT 3445, käuflich erwerblich von der Firma Lanxess) |
| Kautschuk 3: | Styrol-Butadien-Kautschuk (Buna® SBR 1500, käuflich erwerblich von der Firma Trinseo) |
| Füllstoff 1: | mit schwefelhaltigem Organosilan modifizierte; gefällte Kiesel-säure |
| Additiv 1: | sterisch gehindertes Phenol |
| Additiv 2: | sterisch gehindertes Phenol |
| Vulkanisationszusammensetzung 1 (VZ1): | Schwefel |
| Vulkanisationszusammensetzung 2 (VZ2): | *N*-Cyclohexyl-2-benzothiazyl-sulfenamid (80%) |
| Vulkanisationszusammensetzung 3 (VZ3): | Zinkoxid |
| Kautschukformulierung 1 (KF1): | typische Kautschukformulierung basierend auf Styrol-Butadien-Kautschuk, Naturkautschuk, Ruß, Silikate, schwefelhaltige Organosilane, VZ1, VZ2, VZ3 |

*ε* -Caprolacton wurde über CaH2 getrocknet und anschließend bei 130 ° C unter reduziertem Druck destilliert, bei -30 ° C unter Argon gelagert und binnen 14 Tagen verwendet. Titantetrabutoxid wurde zu 50 Vol.-% in trockenem Toluol gelöst und die Lösung unter Argon gelagert.

### Herstellung von Polyol 3

In einem 5 L-Stahlreaktor wurden 2733 g (1,242 mol) Polyol 1 drei Stunden lang bei 100 ° C im Vakuum getrocknet und unter Stickstoff 1179 g (10,35 mol) destilliertes *ε* -Caprolacton zugegeben. Bei 250 U/min und 120 ° C wurden die Komponenten homogen verrührt, bevor 430 • L einer Titantetrabutoxid-Lösung (15 ppm Titan, 50 vol% in Toluol) zugegeben und der Reaktor verschlossen wurde. Nach 4-stündigem Rühren bei 120 ° C wurde das Produkt abgelassen.

### Herstellung von Polyol 4

In einem 5 L-Stahlreaktor wurden 1367 g (506,4 mmol) Polyol 2 drei Stunden lang bei 100 ° C im Vakuum getrocknet und unter Stickstoff 462,7 g (4,059 mol) destilliertes *ε* -Caprolacton zugegeben. Bei 250 rpm und 150 ° C wurden die Komponenten homogen verrührt, bevor 840 µL Titantetrabutoxid-Lösung (15 ppm Titan, 10 vol% in Toluol) zugegeben und der Reaktor verschlossen wurde. Nach 4-stündigem Rühren bei 150 ° C wurde das Produkt abgelassen.

### Bestimmung des Hydroxylwerts (OH-Zahl)

Der Hydroxylwert der Polyole 3 und 4 (OH-Zahl) wurde gemäß DIN 53240 2 bestimmt und sind in Tabelle 1 angegeben. Die leicht unterschiedlichen Werte für die OH-Zahl resultieren ergeben sich für Polyole aus unterschiedlichen Ansätzen der Reaktion von Polyol 1 bzw. 2 mit *ε* -Caprolacton.

### Beispiel für TPU Synthese:

Ein thermoplastisches Polyurethan wurde aus 4,4-Diphenylmethandiisocyanat, Kettenverlängerer 1,6-Hexandiol mit einem Polycaprolacton gecappten Polybutadienediol entsprechend den Angaben in Tabelle 1 unter Rühren in einem Reaktionsgefäß synthetisiert. Nach Erreichen einer Reaktionstemperatur von 80 ° C wurde die Lösung auf eine temperierte Heizplatte mit 125 ° C ausgegossen und die erhaltende TPU-Platte nach Temperung (80 ° C, 15 h) granuliert.

Durch die Kombination von Polyol 3 und 5 konnte das TPU bei einer höheren Temperatur ausgegossen werden. Bei TPU 8 betrug die Temperatur 110 ° C beim Ausgießen.
Das Granulat wurde entweder auf einem Kalander oder Kneter weiterverarbeitet bzw. anschließend durch Spritzgießen zu Prüfkörpern weiterverarbeitet.

### Rezepturen

**Tabelle 1: Beispiele zu Synthese**

| | TPU Vergleich 1 | TPU Vergleich 2 | TPU 1 | TPU 2 | TPU 3 | TPU 4 | TPU 5 | TPU 6 | TPU 7 |
|---|---|---|---|---|---|---|---|---|---|
| OH-Zahl des Polyol | 53,70 | 53,70 | 34,20 | Polyol 3: 34,20, Polyol 4: 37,78 | 34,20 | 34,80 | 33,60 | 33,60 | Polyol 3: 33,65, Polyol 5: 56,00 |
| Polyol 1 [g] | 1000,0 | 1000,0 | | | | | | | |
| Polyol 3 [g] | | | 1000, 0 | 833,3 | 1000, 0 | 1000, 0 | 1086, 3 | 1049, 5 | 600,0 |
| Polyol 4 [g] | | | | 166,7 | | | | | |
| Polyol 5 [g] | | | | | | | | | 400,0 |
| Isocyanat 1 [g] | 204,3 | 209,3 | 157,5 | 158,9 | 162,5 | 261,5 | 309,8 | 350,1 | 211,5 |
| KV 1 [g] | | | | | | | | 92,0 | |
| KV 2 [g] | | | | | | | 95,2 | | |
| KV 3 [g] | 39,9 | 39,6 | 38,4 | 38,4 | 38,0 | 82,3 | | | 55,0 |
| KV 4 [g] | | 0,2 | | | 0,2 | | | | |
| KR 1 [g] | | 1,0 | | | 1,0 | | | | |
| Additiv 1 [g] | | 8,00 | | | 8,00 | 8,00 | 8,69 | 8,39 | 6,40 |
| Additiv 2 [g] | | | | | | | | | 6,40 |
| Kennzahl | 100 | 100 | 100 | 100 | 100 | 100 | 100 | 100 | 100 |
| Schm elztemp. * [° C] | 40 bis 60 ° C | 40 bis 60 ° C | >100 ° C | >100 ° C | >100 ° C | >100 ° C | >100 ° C | >100 ° C | >100 ° C |

| | | | | | | | | | |
|---|---|---|---|---|---|---|---|---|---|
| *Das Aufschmelzverhalten wurde auf einem Kalander bewertet. Die TPU Vergleiche 1 und 2 auf Basis Polyol 1 schmolzen bei sehr niedrigen Temperaturen auf, was für ein sehr niedriges Molekulargewicht spricht. Das Material haftete so stark an der metallischen Oberfläche des Kalanders, dass kein Fell erhalten werden konnte. Dagegen zeigten die TPUs basierend auf Polyol 3 eine höhere Schmelztemperatur und es konnte Felle erhalten werden. Aufgrund der Unverträglichkeit der Monomere wurde in den Vergleichsbeispielen 1 und 2 kein ausreichend hohes Molekulargewicht erhalten. Weiter wurden 5 Gew.-Teile der TPUs 1 bis 7 in 95 Gew.-% in DMF aufgelöst. Eine visuelle Beobachtung der Lösungen ergab, dass sich das Polymer vollständig gelöst hat. | | | | | | | | | |

### Vernetzung mit Dicumylperoxid

Gemäß Tabelle 3 wurden die Ausgangsstoffe der Polyolkomponente für ca, 30 Minuten auf 50 ° C temperiert und vermischt, anschließend in den erfindungsgemäßen Beispielen Dicumylperoxid zur Polyolkomponente zugegeben und diese eine Minute mit dem Isocyanat vermischt. Das Gemisch wurde in eine auf 50 ° C temperierte Stufenform mit Tiefen von 2, 6 und 10 mm ausgegossen und mit einem Kunststoffstab glattgestrichen. Nach 30 Minuten wurde das bereits feste Elastomer entformt. Nach ca. 18 Stunden Lagerung bei Raumtemperatur wird die Platte für 30 Minuten bei 160° C gelagert. Anschließend wird die Platte noch für 2 Stunden bei 80 ° C temperiert. Das Polyurethan-Elastomer wurde vor der Charakterisierung mindestens 7 Tage bei 23 ° C und 50 % Luftfeuchtigkeit gelagert.

| | Vergl. 1 | Bsp. 1 | Bsp. 2 | Vergl. 2 | Bsp. 3 | Bsp. 4 |
|---|---|---|---|---|---|---|
| Kat [g] | 0,15 | 0,15 | 0,15 | 0,15 | 0,15 | 0,15 |
| Entschäumer [g] | 0,3 | 0,3 | 0,3 | 0,3 | 0,3 | 0,3 |
| KV1 [g] | 4,0 | 4,0 | 4,0 | 4,0 | 4,0 | 4,0 |
| Polyol 3 [g] | 95 | 95 | 95 | | | |
| Polyol 4 [g] | | | | 95 | 95 | 95 |
| Dicumylperoxid [g] | | 0,2 | 0,3 | | 0,2 | 1,0 |
| | | | | | | |
| Iso 2 | x | x | x | x | x | x |
| Index | 100 | 100 | 100 | 100 | 100 | 100 |
| | | | | | | |
| Shore A | 69 | 71 | 70 | 69 | 68 | 78 |
| Zugfestigkeit | 10 | 10 | 11 | 6 | 5 | 6 |
| Bruchdehnung | 380 | 170 | 130 | 220 | 140 | 70 |
| DVR (24h/70° C/30 min) [%] | 54 | 30 | 21 | 25 | 17 | 17 |
| DVR (24h/70° C/30 min) [%] | 98 | 55 | 41 | 57 | 45 | 25 |

Tabelle 3 zeigt im Vergleich zur rein thermischen Vernetzung gemäß den Vergleichsbeispielen bei der Vernetzung mit Peroxid einen deutlich verbesserten Druckverformungsrest bei ähnlicher Härte und Zugfestigkeit sowie durch die Vernetzung bedingt geringerer Bruchdehnung.

### Beispiele zu Blends aus Kautschuk und TPU

### Herstellung

In einem 200 g Laborkneter wurde das jeweilige TPU zusammen mit dem Kautschuk entsprechend der Zusammensetzung aus Tabelle 3 bei 180 ° C bei 50 Umdrehung pro Minute für 10 Minuten vermengt. Die Blends wurden im Anschluss mindestens 24 Stunden bei Raumtemperatur aufbewahrt.

### Rezepturen

**Tabelle 3: Beispiele zu Synthese der Blends**

| | Blend 1 | Blend 2 | Blend 3 | Blend 4 | Blend 5 |
|---|---|---|---|---|---|
| TPU | TPU 4 | TPU 5 | TPU 5 | TPU 5 | TPU 6 |
| Kautschuk 1 | 30 % | 25% | | | 50% |
| Kautschuk 2 | | | 33 % | | |
| Kautschuk 3 | | | | 33 % | |

### Beispiel für TPV bzw. TPV-Gummi Blend Synthese

### Herstellungsbeispiel auf einem Laborwalzwerk

Auf einem Laborwalzwerk wurde bei 130 ° C das TPU 3 zu einer Matte ausgewalzt. Anschließend wurden die Vulkanisationsadditive entsprechend den Angaben in Tabelle 4 (Bsp. 7) zugegeben. Das erhaltene Walzenfell wurde anschließend zwischen 3 bis 12 Stunden bei Raumtemperatur gelagert.

### Vulkanisation

In einer dampfbeheizten Vulkanisationspresse wird das TPV bzw. TPV/Gummi in einen 1,8 bis 2 mm dicken 15 cm x 15 cm Stahlrahmen gelegt und entsprechend der durch ein Vulkameter bestimmten Vulkanisationsverhalten bei 100 bar, 150 bis 170 ° C für 10 bis 25 Minuten vulkanisiert.

### Beispiele für Vulkanisationsbedingungen

**Tabelle 4: Vulkanisationsbedingungen zur Herstellung von TPV**

| | Vergl. 3 | Vergl. 4 | Vergl. 5 | Bsp. 5 | Bsp. 6 | Bsp. 7 | Bsp. 8 | Bsp. 9 |
|---|---|---|---|---|---|---|---|---|
| TPU / Blend | Vergleich 1 | Vergleich 2 | Vergleich 2 | TPU 1 | TPU 2 | TPU 3 | TPU 3 | TPU 7 |
| VZ 1 [phr] | 2 | 2 | 2 | 2 | 2 | 2 | 2 | 2 |
| VZ 2 [phr] | 1 | 1 | 1 | 1 | 1 | 1 | 1 | 1 |
| VZ 3 [phr] | 2 | 2 | 2 | 2 | 2 | 2 | 2 | 2 |
| Füllstoff 1 [phr] | 0 | 0 | 2 | 0 | 0 | 0 | 2 | 0 |
| Druck [bar] | 100 | 100 | 100 | 100 | 100 | 100 | 100 | 100 |
| Temperatur [° C] | 170 | 170 | 170 | 170 | 170 | 170 | 170 | 170 |
| Zeit [Min.] | 25 | 25 | 25 | 25 | 25 | 25 | 25 | 25 |

**Tabelle 5: Vulkanisationsbedingungen zur Herstellung von TPV/Gummi Blends**

| | Bsp. 10 | Bsp. 11 | Bsp. 12 | Bsp. 13 | Bsp. 14 |
|---|---|---|---|---|---|
| TPU / Blend | Blend 1 | Blend 3 | Blend 4 | Blend 5 | Blend 2 |
| VZ 1 [phr] | 2 | 2 | 2 | 2 | 2 |
| VZ 2 [phr] | 1 | 1 | 1 | 1 | 1 |
| VZ 3 [phr] | 2 | 2 | 2 | 2 | 2 |
| Druck [bar] | 100 | 100 | 100 | 100 | 100 |
| Temperatur [° C] | 170 | 170 | 170 | 150 | 170 |
| Zeit [Min.] | 25 | 25 | 25 | 30 | 25 |

### Beispiele zu Mechaniken

**Tabelle 6: Beispiele zu Eigenschaften der Vulkanisate**

| | Bsp. 5 | Bsp. 6 | Bsp. 7 | Bsp. 8 | Bsp. 9 | Bsp. 10 | Bsp. 11 | Bsp. 12 | Bsp. 13 | Bsp. 14 |
|---|---|---|---|---|---|---|---|---|---|---|
| | TPU 1 | TPU 2 | TPU 3 | TPU 3 | TPU 5 | Blen d 1 | Blen d 3 | Blen d 4 | Blen d 5 | Blen d 2 |
| Dichte [g/cm3] | 1,03 3 | 1,02 9 | 1,03 3 | 1,03 5 | 1,05 4 | 1,03 5 | 1,04 4 | 1,03 0 | 1,00 2 | 1,04 2 |
| Shore A | 61 | 60 | 67 | 69 | 66 | 66 | 69 | 64 | 57 | 67 |
| Zugfestigkeit [MPa] | 7 | 6 | 7 | 9 | 10 | 10 | 11 | 7 | 16 | 10 |
| Reiß-dehnung [%] | 400 | 360 | 340 | 350 | 500 | 420 | 380 | 330 | 540 | 400 |
| Weiterreiß-widerstand [kN/m] | 13 | 12 | 14 | 12 | 15 | 15 | 13 | 16 | 11 | 15 |
| E-Modul [MPa] | 5 | 6 | 4 | 6 | 5 | | 6 | 4 | | 7 |
| TMA Onset Temperatu re [° C] | 210 | 219 | 227 | 214 | 221 | 197 | 398 | 425 | 208 | 224 |

| | | | | | | | | | | |
|---|---|---|---|---|---|---|---|---|---|---|
| * Bei den Vergleichsbeispielen 1, 2 und 3 kam es zu einer sehr starken Blasenbildung während der Vulkanisation. Infolge konnte keine Mechanik von den Platten gemessen werden. | | | | | | | | | | |

### Beispiel für TPV/Gummi Composites

Auf einem Laborwalzwerk bei 80 bis 130 ° C wurde das TPU bzw. die TPU/Kautschuk Blends mit den Vulkanisationsbeschleunigersystem entsprechend den Angaben aus Tabelle 4 bis 9 versetzt und zu 3 bis 4 mm dicke Matten ausgewalzt.
In einem Edelstahlrahmen (Maße 7 x 13 x 19 mm) wurde zunächst die Kautschukformulierung (KF1) mit den Vulkanisationsadditiven und anschließend die TPU Formulierung reingelegt, sodass das zu verpressende Material mindestens 1 mm dicker als der Edelstahlrahmen war. Zwischen die Kautschuk- und TPU-Formulierung wurde ein 2 cm breiter Streifen Mylar Folie am Rand dazwischen gelegt, um später an diesem Bereich die Klammern für den Peel off Test zu befestigen.

**Tabelle 7: Beispiele zur Herstellung von TPV bzw. TPV/Gummi auf Gummi**

| | Com. 3 | Com. 4 | Com. 5 | Com. 6 |
|---|---|---|---|---|
| Additivierung des TPUs | | | | |
| TPU [phr] | 100 von TPU 3 | 100 von TPU 3 | 100 von TPU 7 | 100 von Blend 2 |
| VZ 1 [phr] | 2 | 2 | 2 | 2 |
| VZ 2 [phr] | 1 | 1 | 1 | 1 |
| VZ 3 [phr] | 2 | 2 | 2 | 2 |
| Füllstoff 1 [phr] | 0 | 2 | 0 | 2 |

| Verwendete Kautschukformulierung | | | | |
|---|---|---|---|---|
| | KF1 | KF1 | KF1 | KF1 |

| Vulkanisationsbedingungen | | | | |
|---|---|---|---|---|
| Druck [bar] | 100 | 100 | 100 | 100 |
| Temperatur [° C] | 170 | 170 | 170 | 170 |
| Zeit [Min.] | 25 | 25 | 25 | 25 |

### Bestimmung der Haftung

Die beiden Einzelschichten, bestehend aus PU und Gummi, wurden über die Gesamtlänge ihrer flachen Seite in einer Presse vulkanisiert (Entspricht der Prüfplatte). Zwischen den beiden Schichten an der Längsseite wurde 2 cm Mylar-Folie gelegt, damit die Proben an der Stelle auseinandergehen, damit diese später von der Maschine gezogen werden können. Die Prüfplatte wird in 20 mm Breite Stücke gesägt zu insgesamt 5 Prüfkörper.
Zunächst wird die untere Spannbacke demontiert, damit der Wegaufnehmer aus der Prüfstrecke entfernt werden kann (Richtung untere Traverse). Das Rollenlager wird dann in die obere Spannbacke eingeklemmt und die untere Spannbacke mit Einspannklemme wieder montiert.
Der Prüfkörper wird auf die Rollen gelegt und an der Seite der Mylar-Folie wird eine Schicht (vorzugsweise die Gummischicht) mit einer Pinzette durch die beiden Rollen gezogen und in die untere Einspannklemme fixiert. Die Spannbacke fährt dann runter und zieht dabei die eine Schicht von der anderen.
Es werden die Maximalkraft Fₘₐₓ in N und der Weg in mm bis zum Bruch als Mittelwerte aus 5 Prüfungen angegeben.
Die Ergebnisse des 90 ° C peel off Tests sind in Tabelle 11 aufgelistet. In der untersten Zeile ist das Kraftmaximum aufgetragen, das die Maschine messen konnte, ohne dass es zu einem Bruch an der Phasengrenze bzw. in einem der beiden Materialien kam.

**Tabelle 8: Beispiele zur Haftung (90 ° C Peel off Test)**

| | Com. 3 | Com. 4 | Com. 5 | Com. 6 |
|---|---|---|---|---|
| Kraftmaximum bei Bruch an Phasengrenze [N] | | | | |
| Kraftmaximum bei Materialversagen [N] | | | 367 | 364 |
| Kraftmaximum bei keinem Materialversagen [N] | 449 | 469 | | |

### Messmethoden:

Für die Materialcharakterisierung können u.a. folgende Messmethoden genutzt werden: DSC, DMA, TMA, NMR, FT-IR, GPC.

| | |
|---|---|
| Shore-Härte A | DIN 7619-1, |
| Zugfestigkeit | DIN 53 504, |
| Reißdehnung | DIN 53 504, |
| Weiterreißfestigkeit | DIN 53 515, |
| Druckverformungsrest (DVR) | DIN ISO 815, |
| E-Modul | DIN 53 504 (S1 Zugstab), |
| Abrieb | DIN 4649 |

## Patentansprüche

1. Vernetztes Polyurethan, erhältlich durch ein Verfahren, bei dem man
a) Polyisocyanate mit
b) polymere Verbindungen mit im Mittel mindestens 1,5 gegenüber Isocyanatgruppen reaktiven Wasserstoffatomen, enthaltend
b1) mindestens ein Dien-Blockcopolymer mit im Mittel mindestens 1,5 gegenüber Isocyanat reaktiven Wasserstoffatomen, das eine Polydien-Hauptkette und mindestens einer Seiten- oder endständigen Kette aus einem Polyether und/oder einem Polyester aufweist und wobei der Gewichtsanteil der Polydien-Hauptkette, bezogen auf das Gesamtgewicht des Dien-Blockcopolymers b1) 25 bis 95 Gew.-% beträgt, und
b2) gegebenenfalls weitere polymere Verbindungen mit mindestens zwei gegenüber Isocyanat reaktiven Wasserstoffatomen
c) gegebenenfalls Katalysator
d) gegebenenfalls Vulkanisationsmittel
e) gegebenenfalls Kettenverlängerer, Kettenregler und/oder Vernetzungsmittel,
f) gegebenenfalls Treibmittel und
g) gegebenenfalls Hilfsmittel und/oder Zusatzstoffe,
h) gegebenenfalls Kautschuk
zu einer Reaktionsmischung vermischt und zu vernetzbarem Polyurethan aushärtet und Doppelbindungen des Dien-Blockcopolymers b1) vernetzt, wobei das Vernetzen der Doppelbindungen des Dien-Blockcopolymers b1) durch Schwefel enthaltendes Vulkanisationsmittel oder durch Peroxid enthaltendes Vulkanisationsmittel (d) und/oder durch Bestrahlung mit hochenergetischer Strahlung erfolgt.

2. Vernetztes Polyurethan nach Anspruch 1, **dadurch gekennzeichnet, dass** das Vernetzen der Doppelbindungen des Dien-Blockcopolymers b1) durch Schwefel enthaltendes Vulkanisationsmittel oder durch Peroxid enthaltendes Vulkanisationsmittel erfolgt und das Vulkanisationsmittel erst nach der Herstellung des Polyurethans zugegeben wird.

3. Vernetztes Polyurethan nach einem der Ansprüche 1 oder 2, **dadurch gekennzeichnet, dass** als Polyisocyanate symmetrische Diisocyanate eingesetzt werden.

4. Vernetztes Polyurethan nach einem der Ansprüche 1 bis 3, **dadurch gekennzeichnet, dass** als Dien-Blockcopolymer mit mindestens zwei gegenüber Isocyanat reaktiven Wasserstoffatomen b1) ein Umsetzungsprodukt aus Polybutadienol und cyclischem Ester eingesetzt wird

5. Vernetztes Polyurethan nach einem der Ansprüche 1 bis 4, **dadurch gekennzeichnet, dass** das Dien-Blockcopolymer mit mindestens zwei gegenüber Isocyanat reaktiven Wasserstoffatomen b1) ein zahlenmittleres Molekulargewicht von 500 bis 20.000 g/mol und eine mittlere OH-Funktionalität von 1,8 bis 5,0 aufweist.

6. Vernetztes Polyurethan nach einem der Ansprüche 1 bis 5, **dadurch gekennzeichnet, dass** das Dien-Blockcopolymer mit mindestens zwei gegenüber Isocyanat reaktiven Wasserstoffatomen b1) mindestens 50 %, bezogen auf den Gehalt an OH-Gruppen im Dien-Blockcopolymer primäre OH-Gruppen aufweist.

7. Vernetztes Polyurethan nach einem der Ansprüche 1 bis 6, **dadurch gekennzeichnet, dass** Kettenverlängerer und/oder Vernetzungsmittel d) ausgewählt ist aus der Gruppe, bestehend aus Ethylenglykol, 1,2-Propandiol, 1,3-Propandiol, 2-Methyl-1,3-propandiol, 1,4-Butandiol, 1,5-Pentandiol, 1,6-Hexandiol, Diethylenglykol, Glycerin, Trimethlyolpropan, ethoxyliertem und/oder propoxyliertem Glycerin, ethoxyliertem und/oder propoxyliertem Trimethylolpropan, Dipropylenglykol, Bis-(2-hydroxyethyl)-hydrochinon und Mischungen aus zwei oder mehreren Komponenten daraus.

8. Vernetztes Polyurethan nach einem der Ansprüche 1 bis 7, **dadurch gekennzeichnet, dass** die Hilfs- und Zusatzstoffe Silikate enthalten, die oberflächenmodifiziert sein können.

9. Vernetztes Polyurethan nach einem der Ansprüche 1 bis 8, **dadurch gekennzeichnet, dass** die Herstellung des Polyurethans bei einem Isocyanatindex von 90 bis 110 erfolgt.

10. Verbundstoff, enthaltend ein Vernetztes Polyurethan nach einem der Ansprüche 1 bis 9 und Gummi.

11. Blend aus einem vernetzten Polyurethan gemäß einem der Ansprüche 1 bis 9 und Gummi

12. Verfahren zur Herstellung eines Verbundstoffs nach Anspruch 10, **dadurch gekennzeichnet, dass** vernetzbares Polyurethan und Kautschuk in Kontakt gebracht werden und vernetzt werden.

13. Verwendung von vernetztem Polyurethan gemäß einem der Ansprüche 1 bis 9 als Reifen oder Teile von Reifen, Kabelummantelung, Schuhsohle, Rolle oder Schlauch.

14. Verwendung von vernetztem Polyurethan gemäß einem der Ansprüche 1 bis 10 zur Herstellung von geschäumten Folien, geschäumten Formteilen oder geschäumten Partikeln sowie den daraus erhältlichen Partikelschäumen.

## Claims

1. A crosslinked polyurethane obtainable by a process wherein
a) polyisocyanates are mixed with
b) polymeric compounds having on average at least 1.5 hydrogen atoms which are reactive toward isocyanate groups and comprising
b1) at least one diene block copolymer which has on average at least 1.5 hydrogen atoms which are reactive toward isocyanate and has a polydiene main chain and at least one side chain or terminal chain composed of a polyether and/or a polyester, where the proportion by weight of the polydiene main chain is, based on the total weight of the diene block copolymer b1), from 25 to 95% by weight and
b2) optionally further polymeric compounds having at least two hydrogen atoms which are reactive toward isocyanate,
c) optionally catalyst,
d) optionally vulcanizing agents,
e) optionally chain extenders, chain transfer agents and/or crosslinkers,
f) optionally blowing agents and
g) optionally auxiliaries and/or additives,
h) optionally rubber
to give a reaction mixture and the mixture is cured to give crosslinkable polyurethane and double bonds of the diene block copolymer b1) are crosslinked, wherein the crosslinking of the double bonds of the diene block copolymer b1) is effected by means of a sulfur-comprising vulcanizing agent or by means of a peroxide-comprising vulcanizing agent (d) and/or by irradiation with high-energy radiation.

2. The crosslinked polyurethane according to claim 1, wherein the crosslinking of the double bonds of the diene block copolymer b1) is effected by means of a sulfur-comprising vulcanizing agent or by means of a peroxide-comprising vulcanizing agent and the vulcanizing agent is added only after production of the polyurethane.

3. The crosslinked polyurethane according to either of claims 1 and 2, wherein symmetric diisocyanates are used as polyisocyanates.

4. The crosslinked polyurethane according to any of claims 1 to 3, wherein a reaction product of polybutadienol and a cyclic ester is used as diene block copolymer b1) having at least two hydrogen atoms which are reactive toward isocyanate.

5. The crosslinked polyurethane according to any of claims 1 to 4, wherein the diene block copolymer b1) having at least two hydrogen atoms which are reactive toward isocyanate has a number average molecular weight of from 500 to 20 000 g/mol and an average OH functionality of from 1.8 to 5.0.

6. The crosslinked polyurethane according to any of claims 1 to 5, wherein the diene block copolymer b1) having at least two hydrogen atoms which are reactive toward isocyanate has at least 50% of primary OH groups, based on the content of OH groups in the diene block copolymer.

7. The crosslinked polyurethane according to any of claims 1 to 6, wherein chain extender and/or crosslinker d) is selected from the group consisting of ethylene glycol, 1,2-propanediol, 1,3-propanediol, 2-methyl-1,3-propanediol, 1,4-butanediol, 1,5-pentanediol, 1,6-hexanediol, diethylene glycol, glycerol, trimethlyolpropane, ethoxylated and/or propoxylated glycerol, ethoxylated and/or propoxylated trimethylolpropane, dipropylene glycol, bis(2-hydroxyethyl)hydroquinone and mixtures of two or more components from among these.

8. The crosslinked polyurethane according to any of claims 1 to 7, wherein the auxiliaries and additives comprise silicates which can be surface-modified.

9. The crosslinked polyurethane according to any of claims 1 to 8, wherein the production of the polyurethane is carried out at an isocyanate index of from 90 to 110.

10. A composite comprising a crosslinked polyurethane according to any of claims 1 to 9 and rubber.

11. A blend of a crosslinked polyurethane according to any of claims 1 to 9 and rubber.

12. A process for producing a composite according to claim 10, wherein crosslinkable polyurethane and rubber are brought into contact and crosslinked.

13. The use of crosslinked polyurethane according to any of claims 1 to 9 as tire or parts of tires, cable sheathing, shoe sole, roller or hose.

14. The use of crosslinked polyurethane according to any of claims 1 to 10 to produce foamed films, foamed moldings or foamed particles and also the expanded polymers obtainable therefrom.

## Revendications

1. Polyuréthane réticulé, pouvant être obtenu par un procédé dans lequel on mélange
a) des polyisocyanates avec
b) des composés polymères dotés en moyenne d'au moins 1,5 atome d'hydrogène réactif envers des groupes isocyanate, contenant
b1) au moins un copolymère à blocs de diène doté en moyenne d'au moins 1,5 atome d'hydrogène réactif envers isocyanate, qui présente une chaîne principale de polydiène et au moins une chaîne latérale ou terminale composée d'un polyéther et/ou d'un polyester et la proportion en poids de la chaîne principale de polydiène, par rapport au poids total du copolymère à blocs de diène b1) étant de 25 à 95 % en poids, et
b2) éventuellement des composés polymériques supplémentaires dotés d'au moins deux atomes d'hydrogène réactifs envers isocyanate
c) éventuellement un catalyseur
d) éventuellement un agent de vulcanisation
e) éventuellement un extenseur de chaîne, un régleur de chaîne et/ou un agent de réticulation,
f) éventuellement un agent propulseur et
g) éventuellement un adjuvant et/ou des additifs,
h) éventuellement un caoutchouc
pour donner un mélange réactionnel et on le durcit en un polyuréthane réticulable et on réticule des doubles liaisons du copolymère à blocs de diène b1), la réticulation des doubles liaisons du copolymère à blocs de diène b1) étant réalisée par un agent de vulcanisation contenant du soufre ou par un agent de vulcanisation (d) contenant un peroxyde et/ou par irradiation avec un rayonnement à haute énergie.

2. Polyuréthane réticulé selon la revendication 1, **caractérisé en ce que** la réticulation des doubles liaisons du copolymère à blocs de diène b1) est réalisée par un agent de vulcanisation contenant du soufre ou par un agent de vulcanisation contenant un peroxyde et l'agent de vulcanisation est ajouté seulement après la préparation du polyuréthane.

3. Polyuréthane réticulé selon l'une quelconque des revendications 1 et 2, **caractérisé en ce que** des diisocyanates symétriques sont utilisés en tant que polyisocyanates.

4. Polyuréthane réticulé selon l'une quelconque des revendications 1 à 3, **caractérisé en ce qu'**un produit de transformation de polybutadiènol et d'un ester cyclique est utilisé en tant que copolymère à blocs de diène b1) doté d'au moins deux atomes d'hydrogène réactifs envers isocyanate.

5. Polyuréthane réticulé selon l'une quelconque des revendications 1 à 4, **caractérisé en ce que** le copolymère à blocs de diène b1) doté d'au moins deux atomes d'hydrogène réactifs envers isocyanate présente un poids moléculaire moyen en nombre de 500 à 20 000 g/mole et une fonctionnalité d'OH moyenne de 1,8 à 5,0.

6. Polyuréthane réticulé selon l'une quelconque des revendications 1 à 5, **caractérisé en ce que** le copolymère à blocs de diène b1) doté d'au moins deux atomes d'hydrogène réactifs envers isocyanate présente au moins 50 % de groupes OH primaires par rapport à la teneur en groupes OH dans le copolymère à blocs.

7. Polyuréthane réticulé selon l'une quelconque des revendications 1 à 6, **caractérisé en ce que** l'extenseur de chaîne et/ou l'agent de réticulation d) est choisi dans le groupe constitué par l'éthylèneglycol, le 1,2-propanediol, le 1,3-propanediol, le 2-méthyl-1,3-propanediol, le 1,4-butanediol, le 1,5-pentanediol, le 1,6-hexanediol, le diéthylèneglycol, la glycérine, le triméthylolpropane, la glycérine éthoxylée et/ou propoxylée, le triméthylolpropane éthoxylé et/ou propoxylé, le dipropylèneglycol, la bis-(2-hydroxyéthyl)-hydroquinone et des mélanges de deux ou plus de deux composants correspondants.

8. Polyuréthane réticulé selon l'une quelconque des revendications 1 à 7, **caractérisé en ce que** les substances auxiliaires et les additifs contiennent des silicates qui peuvent être modifiés en surface.

9. Polyuréthane réticulé selon l'une quelconque des revendications 1 à 8, **caractérisé en ce que** la préparation du polyuréthane est réalisée à un indice d'isocyanate de 90 à 110.

10. Matériau composite contenant un polyuréthane réticulé selon l'une quelconque des revendications 1 à 9 et une gomme.

11. Mélange d'un polyuréthane réticulé selon l'une quelconque des revendications 1 à 9 et d'une gomme.

12. Procédé pour la préparation d'un matériau composite selon la revendication 10 **caractérisé en ce qu'**un polyuréthane et un caoutchouc réticulables sont mis en contact et sont réticulés.

13. Utilisation de polyuréthane réticulé selon l'une quelconque des revendications 1 à 9 en tant que pneu ou parties de pneus, gaine de câble, semelle de chaussure, rouleau ou tuyau.

14. Utilisation de polyuréthane réticulé selon l'une quelconque des revendications 1 à 10 pour la préparation de feuilles moussées, de pièces moulées moussées ou de particules moussées ainsi que des mousses de particule pouvant être obtenues à partir de celui-ci.
